# EUROPÄISCHE PATENTANMELDUNG

(11) **EP 4 411 276 A2**
(43) Veröffentlichungstag der Anmeldung: **07.08.2024**
(21) Anmeldenummer: 24150321.8
(22) Anmeldetag: 04.01.2024
(51) Int. Cl.: F24S 25/65, H02S 20/00

(54) **MONTAGESYSTEM**

(30) Priorität: 31.01.2023 DE 202023100433 U
(71) Anmelder: OBO Bettermann Hungary Kft., 2347 Bugyi (HU)
(72) Erfinder: Dobozi, Bence István, 2310 Szigetszentmiklós (HU)
(74) Vertreter: Haverkamp Patentanwälte PartG mbB

(57) **Zusammenfassung**

Beschrieben ist ein Montagesystem 1 zum Anschließen einer Montagekomponente 3, etwa einer solchen zum Befestigen oder Tragen eines Photovoltaik-Moduls oder Solarpaneels, an eine Montageschiene 2, umfassend
- eine Montageschiene 2 mit zwei in Querrichtung zu ihrer Längserstreckung voneinander beabstandeten und in Richtung zu einer Anlagefläche 7 wirkenden Hinterschnitten 8, 8.1, und
- eine an die Montageschiene 2 anschließbare Montagekomponente 3, wie einen Verbindungsadapter, einen Sockel, eine Stütze oder dergleichen, mit zumindest einer in Richtung zu der Anlagefläche 7 der Montageschiene 2 offenen Schienenaufnahme 9, 9.1, die an ihrer einen Seite durch ein einen Riegelfortsatz 10 zum Eingreifen in einen der beiden Hinterschnitte 8 der Montageschiene 2 aufweisendes Widerlager 11 und an ihrer gegenüberliegenden Seite durch einen eine zum Eingreifen in den anderen Hinterschnitt 8.1 der Montageschiene 7 vorgesehene Rastnase 18 tragenden Rastschenkel 15 eines an der Montagekomponente 3 gehaltenen Rasteinsatzes 12, 12.1 begrenzt ist.

## Beschreibung

Gegenstand der Erfindung ist ein Montagesystem zum Anschließen einer Montagekomponente, etwa einer solchen zum Befestigen oder Tragen eines Photovoltaik-Moduls oder Solarpaneels, an eine Montageschiene.

Photovoltaik-Module und Solarpaneele werden auf Unterkonstruktionen montiert. Bei derartigen Unterkonstruktionen handelt es sich um Trägerprofile, die ihrerseits an dem tragenden Untergrund, beispielsweise einer Dachkonstruktion, auf Bodenträgern oder an Freifeldständern befestigt sind. Bei derartigen Montageschienen handelt es sich typischerweise um rechteckförmige Hohlkammerprofile, von denen eine Seite eine Anlage- bzw. Montagefläche zum Anschließen einer Montagekomponente oder auch zum Auflegen eines Photovoltaik-Moduls oder Solarpaneels bereitstellt. Typischerweise ist in die Anlagefläche eine der Längserstreckung der Montageschiene folgende, hinterschnittene Nut eingebracht. Diese kann genutzt werden, um darin Befestigungsklemmen zum Befestigen von Photovoltaik-Modulen oder Solarpaneelen an der Montageschiene einzusetzen. Diese werden seitlich zu dem bzw. den zu befestigenden Modulen bzw. Paneelen angeordnet und dienen dem Zweck, diese mit der Montageschiene zu verspannen. Das Spannwiderlager wird bei einer solchen Befestigungsklemme durch das oder die in die hinterschnittene Montagenut eingreifenden Anschlussorgane der Befestigungsklemme bereitgestellt. Gemäß einer anderen Ausgestaltung zum Anschließen einer solchen Befestigungsklemme an eine solche Montageschiene umgreifen die Anschlussorgane die Montageschiene außenseitig und greifen jeweils in eine in eine Seitenfläche der Montageschiene, benachbart zu der Anlagefläche eingebrachte Nut ein. Mit derartigen Befestigungsklemmen werden die Module bzw. Paneele unmittelbar mit den die Unterkonstruktion bildenden Montageschienen verspannt.

In einigen Anwendungsfällen ist es jedoch erforderlich, das Unterlager für die Montage der Photovoltaik-Module oder Solarpaneele zunächst mit einer Neigung auszustatten, beispielsweise dann, wenn die Montage nicht auf einem Schrägdach erfolgt. In einem solchen Fall werden die Montageschienen genutzt, um darauf Füße, Stützen und dergleichen zu montieren, auf denen dann ein solches Modul oder Paneel montiert wird. Um eine Montage zu erleichtern, wäre es wünschenswert, wenn Montagekomponenten, die an eine solche Montageschiene angeschlossen werden sollen oder wenn eine Montagekomponente an eine bereits installierte Montageschiene angeschlossen werden soll, erleichtert und insbesondere werkzeuglos möglich wäre. Dieses würde die Montage vereinfachen und vor allem die Zeitdauer der Errichtung deutlich reduzieren können.

Der Erfindung liegt somit die Aufgabe zugrunde, ein Montagesystem zum Anschließen einer Montagekomponente, insbesondere einer solchen zum Befestigen oder Tragen eines Photovoltaik-Moduls oder Solarpaneels vorzuschlagen, welches diesen Anforderungen genügt.

Gelöst wird diese Aufgabe erfindungsgemäß durch ein Montagesystem zum Anschließen einer Montagekomponente, etwa einer solchen zum Befestigen oder Tragen eines Photovoltaik-Moduls oder Solarpaneels, an eine Montageschiene, umfassend
- eine Montageschiene mit zwei in Querrichtung zu ihrer Längserstreckung voneinander beabstandeten und in Richtung zu einer Anlagefläche wirkenden Hinterschnitten, und
- eine an die Montageschiene anschließbare Montagekomponente, wie einem Verbindungsadapter, einem Sockel, einer Stütze oder dergleichen, mit zumindest einer in Richtung zu der Anlagefläche der Montageschiene offenen Schienenaufnahme, die an ihrer einen Seite durch ein einen Riegelfortsatz zum Eingreifen in einen der beiden Hinterschnitte der Montageschiene aufweisendes Widerlager und an ihrer gegenüberliegenden Seite durch einen eine zum Eingreifen in den anderen Hinterschnitt der Montageschiene vorgesehene Rastnase tragenden Rastschenkel eines an der Montagekomponente gehaltenen Rasteinsatzes begrenzt ist.

Dieses Montagesystem umfasst eine an sich bekannte Montageschiene mit zwei in Querrichtung zu ihrer Längserstreckung voneinander beabstandeten und in Richtung zu einer Montagefläche wirkenden Hinterschnitten. Diese Hinterschnitte können beispielsweise durch den seitlichen Abschluss eines I-Trägers als Montageschiene oder auch durch eine entsprechende Profilierung eines stranggepressten Profils bereitgestellt sein. Grundsätzlich ist es auch möglich, eine in die Anlagefläche eingebrachte, der Längserstreckung der Montageschiene folgende hinterschnittene Nut für diese Zwecke zu verwenden.

Die Montagekomponente dieses Montagesystems, bei der es um jedwede Montagekomponente, die für die Errichtung insbesondere von Photovoltaik-Modulen oder Solarpaneelen eingesetzt werden, handeln kann, verfügen an ihrer zu der Montageschiene weisenden Seite über eine Schienenaufnahme. Diese ist in Richtung zur Montage- bzw. Anlagefläche der Montageschiene offen, überspannt diese mithin. Gemäß einer bevorzugten Ausgestaltung greift die Montageschiene mit ihrem die Montagefläche bildenden Schenkel oder ihrer die Montagefläche bildenden Wand in die Schienenaufnahme der Montagekomponenten ein. Die Schienenaufnahme weist an ihrer einen diese seitlich begrenzenden Seite ein durch einen Riegelfortsatz gebildetes Widerlager auf. Der Riegelfortsatz dient zum Eingreifen in einen der beiden Hinterschnitte der Montageschiene. An der gegenüberliegenden Seite ist die Schienenaufnahme durch einen Rastschenkel begrenzt. Dieser trägt eine Rastnase als positive Verrastungsstruktur und dient zum Eingreifen in den anderen Hinterschnitt der Montageschiene. Der Rastschenkel ist mit seiner Rastnase Teil eines an der Montagekomponente gehaltenen Rasteinsatzes. Das Vorsehen eines Rasteinsatzes hat zum Vorteil, dass dieser aus einem anderen Material hergestellt sein kann und typischerweise auch hergestellt ist als die übrigen Bestandteile der Montagekomponente. Schließlich wird die für den bestimmungsgemäßen Rastanschluss der Montagekomponente an die Materialschiene benötigte Materialelastizität nur für den Rasteinsatz bzw. vorwiegend für seinen Rastschenkel benötigt. Daher kann dieser Bestandteil der Montagekomponente aus einem die erforderlichen mechanischen Anforderungen und die erforderliche Materialelastizität bereitstellenden Material, typischerweise rostfreier Federstahl hergestellt sein. Diese Materialeigenschaften werden in einem bevorzugten Ausführungsbeispiel auch genutzt, um den Rasteinsatz werkzeuglos an die übrigen Bestandteile der Montagekomponente, beispielsweise einen Verbindungssockel derselben, anzuschließen.

Das Widerlager der Montagekomponente ist gemäß einem Ausführungsbeispiel nicht nachgiebig, und zwar im Unterschied zu der durch die Rastnase bewirkten Verrastung mit der Montageschiene. In einem solchen Fall ist eine Montage der Montagekomponente an eine Montageschiene denkbar einfach. Das durch die Schienenaufnahme bereitgestellte Widerlager wird bei einer Schrägstellung der Montagekomponente in einen Hinterschnitt der Montageschiene eingehängt. Zugleich ist durch den Eingriff eine Schwenkachse gebildet, um die die Montagekomponente gegenüber der Montageschiene oder auch umgekehrt verschwenkt werden kann. Im Zuge dieser Verschwenkung wird die Rastnase als zweites Widerlager in den zweiten Hinterschnitt eingebracht. Die Montagekomponente ist dann an die Montageschiene angeschlossen und kann von dieser nicht mehr abgezogen werden. Je nach Auslegung der Kontur der Schienenaufnahme und der Montageschiene selbst kann eine Verschiebbarkeit der Montagekomponente in Längserstreckung der Montageschiene gestattet sein.

Typischerweise verfügt eine solche Montagekomponente über zwei in Längserstreckung der Montageschiene voneinander beabstandete Schienenaufnahmen, die gleichsinnig orientiert und mit jeweils einem Rasteinsatz ausgerüstet sind. Je nach Verwendung des Montagesystems liegt dann die Montagekomponente mit dem Boden ihrer beiden Schienenaufnahmen auf der Anlagefläche der Montageschiene oder die Montageschiene liegt mit ihrer Anlagefläche auf den dann nach oben weisenden Abschlüssen der Schienenaufnahme auf.

Eine solche bevorzugte Schwenkmontage zwischen der Montagekomponente und der Montageschiene ist vorteilhaft, auch weil es sich hierbei um eine Bewegung handelt, der das errichtete Montagesystem auch nach daran montiertem Photovoltaik-Modul oder Solarpaneel nicht ausgesetzt ist. Zusätzliche Lösesicherungen sind daher grundsätzlich nicht erforderlich.

Ein solches Montagesystem unterliegt bereits deswegen derartigen Belastungen nicht, da ein Photovoltaik-Modul oder Solarpaneel als über die Fläche starre Einheit über mehrere mit Abstand zueinander angeordnete Montagekomponenten am Unterlager abgestützt ist und aus diesem Grunde eine solche individuelle Verschwenkbewegung einer einzelnen Montagekomponente gegenüber einer einzigen Montageschiene schlichtweg nicht möglich ist.

Der Rastschenkel ist mit seiner Rastnase in Querrichtung zur Längserstreckung der Anlagefläche der Montageschiene verstellbar. Die Materialelastizität nutzend, bedarf es hierzu nicht zusätzlicher Federelemente, damit die Rastnase in den Hinterschnitt zum Abschluss des Schwenkvorganges einspringt. Grundsätzlich ist Derartiges möglich. Wenn die Montagekomponente jedoch einfach gehalten werden soll, wird man diese Maßnahme nicht vorsehen, zumal bei dem Aufbau eines Photovoltaik-Modul- oder Solarpaneel-Feldes die Montage einer Montagekomponente an einer Montageschiene oder umgekehrt je Rasteinsatz in aller Regel nur einmal vorgenommen wird.

Die Rastnase des Rasteinsatzes ist gemäß einem bevorzugten Ausführungsbeispiel mit einer zum Abstützen an dem Hinterschnitt der Montageschiene vorgesehenen kürzeren Riegelflanke und einer längeren, in Richtung der Mündung der Schienenaufnahme weisenden Stellflanke ausgeführt. Hierdurch wird eine bestimmungsgemäße Abstützung am Hinterschnitt gewährleistet. Die Ebene dieser Flanke verläuft gemäß einem Ausführungsbeispiel etwa rechtwinklig zur Ebene des Rastschenkels. Die längere Stellflanke dient als Stellfläche, durch die der Rastschenkel mit seiner Rastnase verstellt wird, wenn dieser an dem den Hinterschnitt bildenden Bestandteil der Montageschiene beim Anschließen der Montagekomponente an die Montageschiene vorbeibewegt wird.

Bei dem Rasteinsatz handelt es sich typischerweise auch um ein Stanz-Biegeteil. Bei einer solchen Auslegung kann die Rastnase durch eine in den Rastschenkel eingebrachte Ausprägung geformt sein.

Der Rasteinsatz verfügt gemäß einem bevorzugten Ausführungsbeispiel über einen Grundkörper, an den der Rastschenkel mit seiner Rastnase angeformt ist. Der Rastschenkel befindet sich in einem Fenster. Der Grundkörper selbst ist gemäß einem Ausführungsbeispiel im Querschnitt U-förmig ausgeführt, wobei die Schenkel dieser Querschnittsgeometrie den benachbarten Randbereich der Schienenaufnahme zumindest bereichsweise nach Art von Wangen einfassen. Hierdurch ist der Rasteinsatz nicht nur versteift, sondern zugleich hinsichtlich seiner Position in Richtung der Längserstreckung der Montageschiene fixiert.

In einem bevorzugten Ausführungsbeispiel ist vorgesehen, dass der Rasteinsatz neben den bereits vorbeschriebenen Bestandteilen über einen die Weite der Schienenaufnahme überspannenden Rücken und an seinem dem Rastschenkel gegenüberliegenden Ende einen Widerlagerschenkel aufweist. Der Rücken liegt an dem Boden der Schienenaufnahme an. Der Widerlagerschenkel bildet die Kontur des Widerlagers der Schienenaufnahme nach. Bei einer solchen Auslegung greift somit der Widerlagerschenkel mit einem Abschnitt hinter den Riegelfortsatz des Widerlagers. Auf diese Weise kann unter Ausnutzung der materialelastischen Eigenschaften des Rasteinsatzes dieser ohne Weiteres in eine Schienenaufnahme der Montagekomponente eingesetzt bzw. eingeclipst werden. Zur weiteren Versteifung des Rasteinsatzes kann vorgesehen sein, dass an den einander gegenüberliegenden Längsseiten des Rückens zwei in Richtung von der Schienenaufnahme wegweisende Wangen abgekantet sind. Diese bilden sodann eine im Querschnitt U-förmige Aufnahme, durch die der die Schienenaufnahme bildende Randbereich der Montagekomponente eingefasst ist.

Der Rastschenkel mit seiner Rastnase ist gemäß einem Ausführungsbeispiel durch zwei Zungen an den Grundkörper angeformt. Die beiden Zungen sind voneinander beabstandet. Zwischen den beiden Zungen befindet sich eine Aussparung. In diese greift ein Absatz der diesseitigen Schienenaufnahme ein, wenn der Rasteinsatz an die Montagekomponente angeschlossen ist. Dies dient als Sicherung, damit der Rasteinsatz zumindest im Rahmen eines üblichen Gebrauches unverlierbar an die Montagekomponente angeschlossen ist.

Nachfolgend ist die Erfindung anhand eines Ausführungsbeispiels unter Bezugnahme auf die beigefügten Figuren beschrieben. Es zeigen:
- **Fig. 1:**: Eine perspektivische Ansicht nach Art einer Explosionsdarstellung eines eine Montageschiene und eine Montagekomponente umfassenden Montagesystems,
- **Fig. 2:**: das Montagesystem der Figur 1 in einer Seitenansicht,
- **Fig. 3:**: in einer Seitenansicht die Montagekomponente der vorstehenden Figuren mit dem daran angeschlossenen Rasteinsatz einschließlich einer Detailvergrößerung seines Rastschenkels,
- **Fig. 4:**: die Montagekomponente der vorstehenden Figur beim Anschließen derselben an die Montageschiene,
- **Fig. 5:**: die an die Montageschiene angeschlossene Montagekomponente und
- **Fig. 6:**: in einer perspektivischen Darstellung die an der Montageschiene befestigte Montagekomponente.

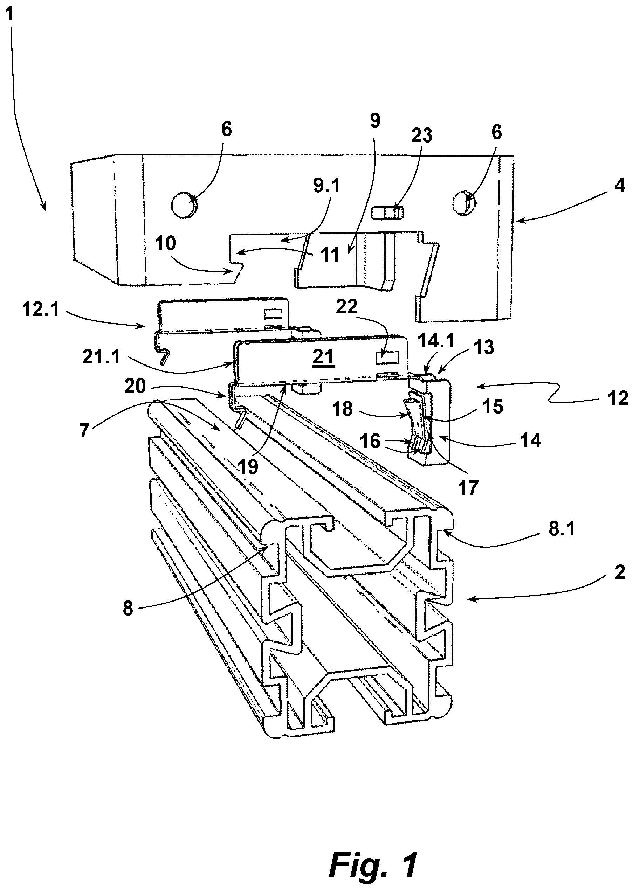

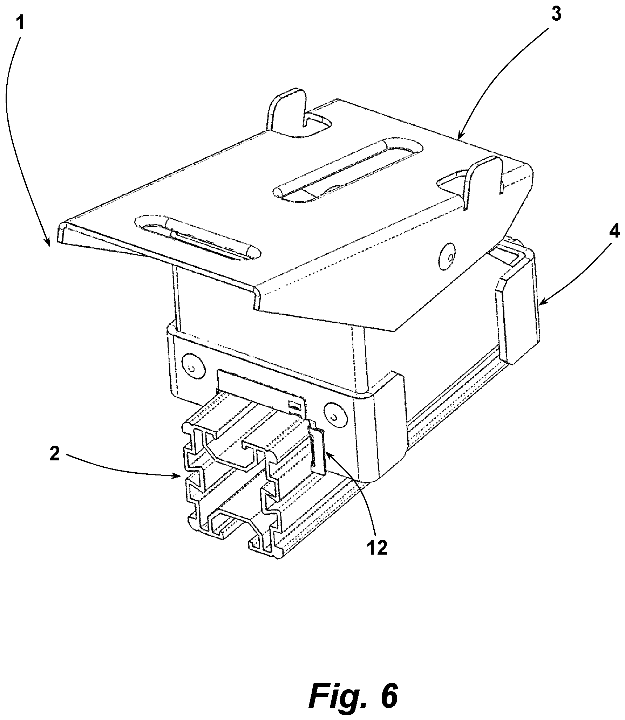

Ein Montagesystem 1 umfasst eine Montageschiene 2 und eine Montagekomponente 3. Von der Montagekomponente 3 ist in Figur 1 nur sein unterer Verbindungssockel 4 gezeigt. Die Montagekomponente 3 in ihrer Gesamtheit ist in der perspektivischen Darstellung der Figur 6 erkennbar. Bei dieser handelt es sich bei dem dargestellten Ausführungsbeispiel um einen Montagefuß, etwa zum Auflegen des Randes eines Photovoltaik-Moduls oder Solarpaneels. Der Verbindungssockel 4 der Montagekomponente 3 ist ein, wie aus Figur 6 erkennbar, offenes Ringstück, gefertigt als Stanz-Biegeteil aus einer mit einer Korrosionsbeschichtung ausgerüsteten Stahlplatine. Angeschlossen ist der Verbindungssockel 4 an die übrigen Bestandteile der Montagekomponente 3 mittels Nieten 5 (siehe Figur 6). In Figur 1, die lediglich den Verbindungssockel 4 zeigt, sind die zum Einsetzen der Nieten 5 darin eingebrachten Durchbrechungen 6 erkennbar.

Die Montageschiene 2 des dargestellten Ausführungsbeispiels ist als stranggepresstes Aluminiumprofil ausgeführt. Seine zu der Montagekomponente 3 weisende Oberseite dient als Anlagefläche 7. Die der Längserstreckung der Montageschiene 2 verlaufenden Abschlüsse der Anlagefläche 7 sind in Richtung zu Anlagefläche 7 hinterschnitten. Die Hinterschneidungen sind mit den Bezugszeichen 8, 8.1 kenntlich gemacht. Bei dem in den Figuren dargestellten Ausführungsbeispiel der Montageschiene 2 sind die Hinterschnitte 8, 8.1 durch jeweils eine mit Abstand zu der Anlagefläche 7 und der Längserstreckung der Montageschiene 2 verlaufende Nut bereitgestellt.

In die die Anlagefläche 7 des Verbindungssockels 4 überspannenden Wände sind in Richtung zur Montageschiene 2 offene Schienenaufnahmen 9, 9.1 eingebracht. Die beiden Schienenaufnahmen 9, 9.1 sind identisch ausgeführt. Die nachfolgenden Ausführungen zu der Schienenaufnahme 9 gelten somit gleichermaßen für die Schienenaufnahme 9.1.

Die Schienenaufnahme 9 dient zur Aufnahme des oberen Abschnittes der Montageschiene 2. Seitlich begrenzt ist die Schienenaufnahme 9 durch ein einen Riegelfortsatz 10 aufweisendes Widerlager 11. Die dem Widerlager 11 gegenüberliegende Seite der Schienenaufnahme 9 ist ausgelegt, damit an dieser Stelle ein Rastschenkel mit einer Rastnase angeordnet werden kann. Bereitgestellt wird der Rastschenkel mit seiner Rastnase durch einen Rasteinsatz 12. Der Rasteinsatz 12 des gezeigten Ausführungsbeispiels verfügt über einen Grundkörper 13, der sich entlang der dem Widerlager 11 gegenüberliegenden Seite der Schienenaufnahme 9 befindet. Der Grundkörper 13 ist im Querschnitt U-förmig profiliert. Mit seinen beiden Schenkeln 14, 14.1 fasst er zu der Schienenaufnahme 9 benachbarte Randbereiche des Verbindungssockels 4 ein. Der Rastschenkel 15 ist über zwei Zungen 16 an die benachbarten Bestandteile des Grundkörpers 13 angeformt. Die beiden Zungen 16 sind in Bezug auf die Richtung der Materialstärke des Verbindungssockels 4 voneinander beabstandet. Der Rastschenkel 15 befindet sich in einem Rastfenster 17 des Grundkörpers 13. Über die Zungen 16 ist der Rastschenkel 15 an den nach unten weisenden Randbereich des Grundkörpers 13 angeformt. Der Rastschenkel 15 trägt eine in einer Seitenansicht asymmetrisch ausgeführte Rastnase 18. Ihre nach oben weisende Flanke dient als Riegelflanke. Diese stützt sich bei an der Montageschiene 2 montierter Montagekomponente 3 an dem Hinterschnitt 8.1 ab. Die zu den Zungen 16 weisende Flanke der Rastnase 18 ist eine Stellflanke.

Angeformt an den Grundkörper 13 des Rasteinsatzes 12 ist ein Rücken 19, durch den der Grundkörper 13 mit einem Widerlagerschenkel 20 verbunden ist. Die Kontur des Widerlagerschenkels 20 ist der Kontur des Riegelfortsatzes 10 des Widerlagers 11 nachgebildet. Bei an den Verbindungssockel 4 angeschlossenem Rasteinsatz 12 stützt sich der Widerlagerschenkel 20 mit seiner zu dem Widerlager 11 weisenden Seite an diesem ab. An den Rücken 19 ist der Längserstreckung folgend an jeder Längsseite eine Wange 21, 21.1 angeformt, und zwar von der Schienenaufnahme 9 wegweisend. Damit fasst der Rasteinsatz 12 wiederum einen Randbereich der Schienenaufnahme 9, bereitgestellt durch den Verbindungssockel 4, ein. In die Wange 21 ist eine Riegelverprägung 22 in Richtung zu dem Verbindungssockel 4 ausgestellt. Der Verbindungssockel 4 trägt an komplementärer Stelle eine Riegelfalle 23, in die die Riegelverprägung 22 bei an den Verbindungssockel 4 angeschlossenem Rasteinsatz eingreift.

Der Rasteinsatz 12 des dargestellten Ausführungsbeispiels ist aus einem rostfreien Federstahl hergestellt.

Auch der Schienenaufnahme 9.1 ist ein gleicher Rasteinsatz 12.1 zugeordnet.

Die dem Widerlager 11 der Schienenaufnahme 9 gegenüberliegende Seite des Verbindungssockels 4 verfügt über eine Stellaussparung 24, in die der Rastschenkel 15 zu seiner Verstellung eingeschwenkt werden kann. Die Stellaussparung 24 endet in Richtung zu dem zur Montageschiene 2 weisenden Abschluss des Verbindungssockels 4 an einem Riegelabsatz 25. Dieser greift bei an den Verbindungssockel 4 angeschlossenem Rasteinsatz 12 zwischen die beiden Zungen 16 und ist somit an dem diesseitigen Auslauf der Rastnase 18 abgestützt.

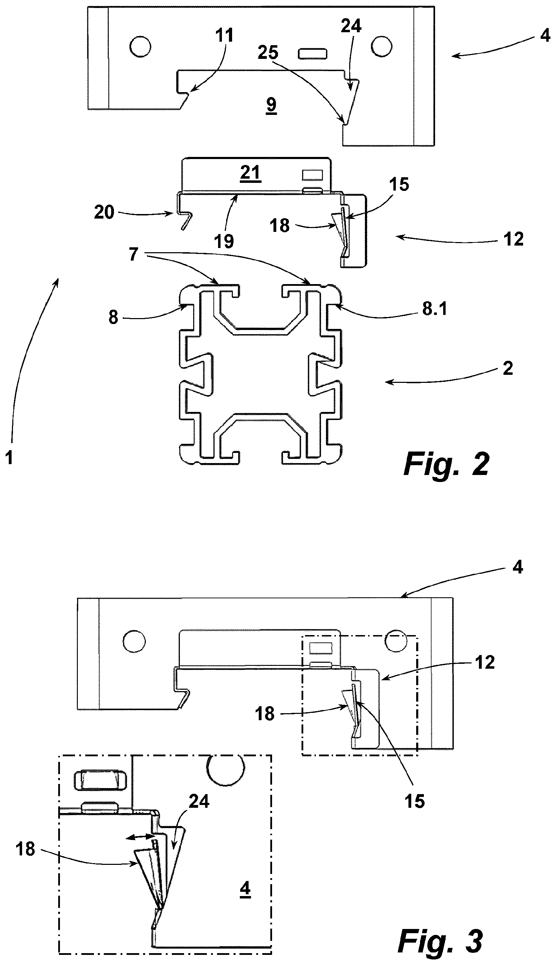

Der an den Verbindungssockel 4 angeschlossene Rasteinsatz 12 ist in Figur 3 gezeigt. Der den Rastschenkel 15 in vergrößerter Darstellung zeigende Ausschnitt zeigt den diesbezüglichen Bereich des Verbindungssockels 4 in einem Schnitt. Aus diesem ist die Abstützung des Riegelabsatzes 25 an der zur Montageschiene 2 weisenden Stirnfläche des Rastschenkels 15 erkennbar, ebenso wie die Möglichkeit, den Rastschenkel 15 in die Stellaussparung 24 hineinschwenken zu können. Diese Schwenkbewegung ist in der Ausschnittsvergrößerung der Figur 3 durch einen Doppelpfeil kenntlich gemacht.

Eine Montage des Rasteinsatzes 12 an den Verbindungssockel 4 ist werkzeuglos möglich. Der Widerlagerschenkel 20 wird an die Kontur des Widerlagers 11 angelegt, wodurch zugleich ein Schwenkwiderlager gebildet ist. Dann wird der Grundkörper 13 des Rasteinsatzes 12 in die Schienenaufnahme 9 eingeschwenkt, bis die in Figur 3 gezeigte Position erreicht ist. In dieser ist der Rasteinsatz 12 unverlierbar an dem Verbindungssockel 4 gehalten.

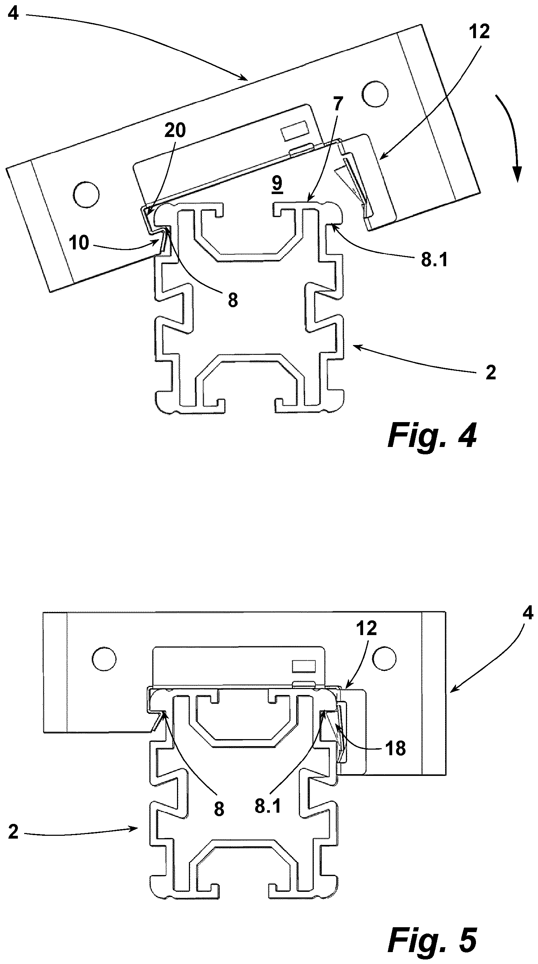

Eine Montage der Montagekomponente 3 mit ihrem Verbindungssockel 4 an die Montageschiene 2 ist denkbar einfach. In einem ersten Schritt wird der Riegelfortsatz 10 mit dem seine Kontur nachbildenden Teil des Widerlagerschenkels 20 in die den Hinterschnitt 8 bereitstellende Nut der Montageschiene 2 eingesetzt, wie in Figur 4 gezeigt. Dieses erfolgt in einer Schrägstellung der Montagekomponente 3 gegenüber der Montageschiene 2. Anschließend wird die Montagekomponente 3 mit ihrem Verbindungssockel 4 gegenüber der Montageschiene 2, wie in Figur 4 durch den Pfeil angedeutet, verschwenkt, bis dass die Rastnase 18 in die den Hinterschnitt 8.1 bildende Nut der Montageschiene 2 eingeführt ist. Dabei dient die geneigte Stellflanke, dass beim Passieren der Rastnase 18 des den Hinterschnitt 8.1 bildenden Teils der Montageschiene 2 diese in die Stellaussparung 24 des Verbindungssockels 4 eingedrückt wird. Ist die Rastnase 18 an diesem Teil der Montageschiene vorbeigeführt, springt diese aufgrund der Materialelastizität des Rastschenkels 15 in ihre in Figur 5 gezeigte, den Hinterschnitt 8.1 hintergreifende Stellung.

Die an die Montageschiene 2 angeschlossene Montagekomponente 3 ist, wie bereits eingangs angesprochen, in Figur 6 gezeigt.

In den Figuren ist die Montageschiene als solche mit einer gewissen Längserstreckung gezeigt, die tatsächlich nur einen Bruchteil ihrer tatsächlichen Längserstreckung ausmacht. Dennoch eignet sich das beschriebene Montagesystem ebenso, wenn als Montageschiene nur ein Abschnitt einer solchen Montageschiene eingesetzt wird, der um ein notwendiges Montagespiel länger ist als der Abstand der beiden Rasteinsätze 12, 12.1 voneinander.

Wenn im Rahmen dieser Ausführungen von einem Stanz-Biegeteil gesprochen wird, schließt dieses selbstverständlich auch Ausgestaltungen ein, bei denen eine konturierte Platine nicht durch Stanzen, sondern beispielsweise auch durch Laserschneiden oder andere Ausschnittsmethoden aus einer Platine ausgeschnitten worden ist.

Die Erfindung ist anhand von Ausführungsbeispielen beschrieben worden. Ohne den Umfang der geltenden Ansprüche zu verlassen, ergeben sich zahlreiche weitere Möglichkeiten, diese umzusetzen, ohne dass dieses im Rahmen dieser Ausführungen im Einzelnen näher erläutert werden müsste.

### Bezugszeichenliste

- 1: Montagesystem
- 2: Montageschiene
- 3: Montagekomponente
- 4: Verbindungssockel
- 5: Niete
- 6: Durchbrechung
- 7: Anlagefläche
- 8, 8.1: Hinterschneidung
- 9,9.1: Schienenaufnahme
- 10: Riegelfortsatz
- 11: Widerlager
- 12, 12.1: Rasteinsatz
- 13: Grundkörper
- 14, 14.1: Schenkel
- 15: Rastschenkel
- 16: Zunge
- 17: Rastfenster
- 18: Rastnase
- 19: Rücken
- 20: Widerlagerschenkel
- 21,21.1: Wange
- 22: Riegelverprägung
- 23: Riegelfalle
- 24: Stellaussparung
- 25: Riegelabsatz

## Patentansprüche

1. Montagesystem zum Anschließen einer Montagekomponente (3), etwa einer solchen zum Befestigen oder Tragen eines Photovoltaik-Moduls oder Solarpaneels, an eine Montageschiene (2), umfassend
- eine Montageschiene (2) mit zwei in Querrichtung zu ihrer Längserstreckung voneinander beabstandeten und in Richtung zu einer Anlagefläche (7) wirkenden Hinterschnitten (8, 8.1), und
- eine an die Montageschiene (2) anschließbare Montagekomponente (3), wie einen Verbindungsadapter, einen Sockel, eine Stütze oder dergleichen, mit zumindest einer in Richtung zu der Anlagefläche (7) der Montageschiene (2) offenen Schienenaufnahme (9, 9.1), die an ihrer einen Seite durch ein einen Riegelfortsatz (10) zum Eingreifen in einen der beiden Hinterschnitte (8) der Montageschiene (2) aufweisendes Widerlager (11) und an ihrer gegenüberliegenden Seite durch einen eine zum Eingreifen in den anderen Hinterschnitt (8.1) der Montageschiene (7) vorgesehene Rastnase (18) tragenden Rastschenkel (15) eines an der Montagekomponente (3) gehaltenen Rasteinsatzes (12, 12.1) begrenzt ist.

2. Montagesystem nach Anspruch 1, **dadurch gekennzeichnet, dass** die Rastnase (18) asymmetrisch ausgeführt ist und eine zum Abstützen an dem Hinterschnitt (8.1) vorgesehene kürzere Riegelflanke und eine zur Mündung der Schienenaufnahme (9, 9.1) weisende längere Stellflanke aufweist.

3. Montagesystem nach Anspruch 1 oder 2, **dadurch gekennzeichnet, dass** die Rastnase (18) als eine in den Rastschenkel (15) eingebrachte Prägung ausgeführt ist.

4. Montagesystem nach einem der Ansprüche 1 bis 3, **dadurch gekennzeichnet, dass** der Rasteinsatz (12, 12.1) einen im Querschnitt U-förmigen Grundkörper (13) umfasst, an den der Rastschenkel (15), in einem Rastschenkelfenster (17) angeordnet, angeformt ist, wobei der Grundkörper (13) den benachbarten Randbereich der Schienenaufnahme (9, 9.1) zumindest bereichsweise einfasst, etwa durch von der Schienenaufnahme (9, 9.1) wegweisend abgekantete Schenkel (14, 14.1).

5. Montagesystem nach einem der Ansprüche 1 bis 4, **dadurch gekennzeichnet, dass** an dem Grundkörper (13) des Rasteinsatzes (12, 12.1) ein die lichte Weite der Schienenaufnahme (9, 9.1) überspannender, eine Tiefenbegrenzung der Schienenaufnahme (9, 9.1) bildender Rücken (19) angeformt ist, der an seinem dem Rastschenkel (15) gegenüberliegenden Ende einen die Kontur des Widerlagers (11) der Schienenaufnahme (9, 9.1) nachbildenden Widerlagerschenkel (20) trägt.

6. Montagesystem nach Anspruch 5, **dadurch gekennzeichnet, dass** der Widerlagerschenkel (20) spielfrei an der Kontur des Widerlagers (11) anliegt.

7. Montagesystem nach Anspruch 5 oder 6, **dadurch gekennzeichnet, dass** an einander gegenüberliegenden Längsseiten des Rückens (19) zwei in Richtung von der Schienenaufnahme (9, 9.1) wegweisende, zusammen einen Randbereich der Schienenaufnahme (9) einfassende Wangen (21, 21.1) abgekantet sind.

8. Montagesystem nach einem der Ansprüche 1 bis 7, **dadurch gekennzeichnet, dass** der Rasteinsatz (12, 12.1) einen oder mehrere in Richtung zur Flachseite des die Schienenaufnahme (9) einfassenden Materials der Montagekomponente (3) ausgestellte Riegelausprägungen (22) und die Montagekomponente (3) komplementäre Riegelfallen (23) aufweisen.

9. Montagesystem nach einem der Ansprüche 1 bis 8, **dadurch gekennzeichnet, dass** die Montagekomponente (3) einen ringförmigen, zwei fluchtend zueinander angeordnete und gleichsinnig orientierte Schienenausnehmungen (9, 9.1) mit jeweils einem darin eingesetzten Rasteinsatz (12, 12.1) aufweisenden Verbindungssockel (4) aufweist.

10. Montagesystem nach einem der Ansprüche 1 bis 9, **dadurch gekennzeichnet, dass** der zumindest eine Rasteinsatz (12, 12.1) materialunterschiedlich zu dem Material des Verbindungssockels (4) ist, insbesondere aus einem Federstahl hergestellt ist.

11. Montagesystem nach einem der Ansprüche 1 bis 10, **dadurch gekennzeichnet, dass** die Montagekomponente (3) ein Stanz-Biegeteil aus einer mit einer Korrosionsschutzbeschichtung ausgerüsteten Stahlplatine ist.

12. Montagesystem nach einem der Ansprüche 1 bis 10, **dadurch gekennzeichnet, dass** die Montagekomponente ein Kunststoffteil ist.

13. Montagesystem nach einem der Ansprüche 1 bis 12, **dadurch gekennzeichnet, dass** die Montagekomponente (3) ein Adapter zum Anschließen einer Montageschiene an einem Bodenmodul einer Unterkonstruktion zum Tragen von Photovoltaik-Modulen oder Solarpaneelen ist.

14. Montagesystem nach einem der Ansprüche 1 bis 12, **dadurch gekennzeichnet, dass** die Montagekomponente ein an die Montageschiene anschließbarer Fuß oder Ständer, jeweils ausgestattet mit einer oberseitigen Montagefläche zum Anschließen eines Befestigungsmittels zum Halten eines Photovoltaik-Moduls oder Solarpaneels ist.
